# EUROPEAN PATENT APPLICATION

(11) **EP 4 174 002 A1**
(43) Date of publication of application: **03.05.2023**
(21) Application number: 21831704.8
(22) Date of filing: 30.06.2021
(51) Int. Cl.: B65G 61/00, G06Q 10/08

(54) **DEVICE, METHOD, AND PROGRAM**

(30) Priority: 30.06.2020 JP 2020113626
(71) Applicant: Asahi Kasei Kabushiki Kaisha, Tokyo 1000006 (JP)
(72) Inventor: KAMIYAMA Kenji, Tokyo 100-0006 (JP); UEKI Mika, Tokyo 100-0006 (JP); ISHII Takeshi, Tokyo 100-0006 (JP)
(74) Representative: Hoffmann Eitle
(86) International application number: PCT/JP2021/024885
(87) International publication number: WO 2022/004833

(57) **Abstract**

There is provided a device including: an order information acquisition unit configured to acquire order information including destination information indicating a destination for transporting perishables to be ordered; a transportation information acquisition unit configured to acquire transportation information including temperature and location information of perishables in transport; a temperature estimation unit configured to calculate, on the basis of the transportation information and the order information, an estimated temperature at the destination in a case where the perishables in transport are transported to the destination; a decision unit configured to decide whether to transport the perishables in transport to the destination on the basis of the estimated temperature; and an instruction unit configured to provide instruction to transport the perishables in transport to the destination according to a result of the decision.

## Description

### BACKGROUND

### 1. TECHNICAL FIELD

The present invention relates to a device, a method, and a program.

### 2. RELATED ART

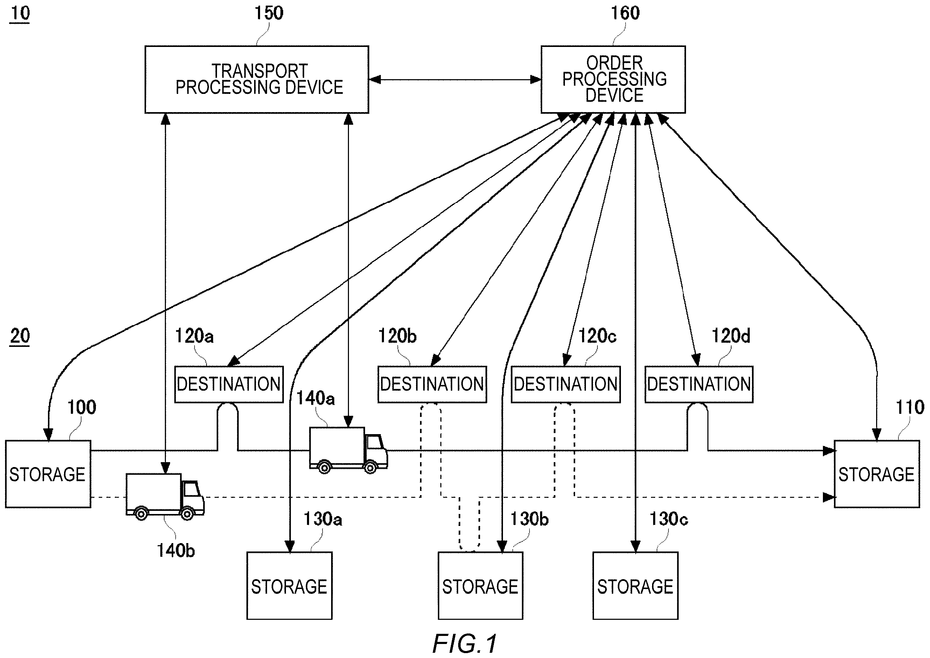

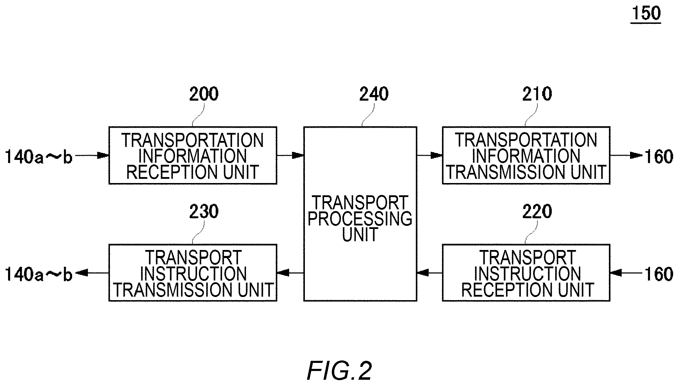

Patent Document 1 describes "When the speculatively shipped package 260 is selected for the corresponding order, the procurement computer system 210 is configured to convey the complete description of the delivery address designated by the order to the hub 120 at which the selected package 260 is currently arranged or to which the package is on its way" (paragraph 0027) and "It should be noted that in some embodiments, assignment of the later-selected delivery address to the speculatively shipped package 260 may not be made at the hub, but alternatively may be made during the last mile (for example, during the transportation of the package 260 on a local delivery path) of a delivery.... When the speculatively shipped package 260 departs from the hub 120 on the local delivery path, the delivery address may be sent from the hub 120 to the carrying vehicle by using, for example, a radio, satellite, mobile phone, mobile text message, or another appropriate communication technique, so as to specify a complete delivery address during the transportation" (paragraph 0031).
Patent Document 2 discloses that "The principle of the transportation plan creation method of the present invention will be described. The item to be decided is the conveyance destination of the transporter, but it is necessary to consider numerous restrictions such as the avoidance of interference between transporters due to the processing capacity in the intermediate process and a restriction on entering and exiting vehicles in the raw material mixing process of the factory B. In principle, it is also possible to obtain a solution with a mixed integer programming method by using a constraint expression including all of these numerous restrictions, but it is impossible to obtain the solution in a practical time due to the processing capacity of a computer. Therefore, in the process of deciding the conveyance destination of the transporter (Fig. 2), it is a feature of the present invention that a physical distribution phenomenon from the factory A to the factory B, for example, the interference between transporters in the intermediate process or the like is calculated by the physical distribution simulator of step S206. It is necessary to determine the conveyance destination of the transporter in order to perform simulation using the physical distribution simulator. Thus, before performing the simulation, all arrival times at which the transporters can move to the factory B are predicted as accurately as possible by a relational expression or the like that does not require repeated calculation in step S202 (corresponding to 11 in Fig. 1). Based on the predicted arrival times, an equality/inequality constraint expression regarding the decision of the conveyance destination of the transporter is created in step S203, and an objective function quantitatively representing the quality of the transportation plan is decided (corresponding to 15 in Fig. 1). In step S204, a solution that satisfies the constraint expression and minimizes the objective function is obtained by the mixed integer programming method to obtain the conveyance destination of each transporter (corresponding to 12 in Fig. 1)".

### CITATION LIST

### PATENT DOCUMENT

Patent Document 1: Japanese translation publication of PCT route patent application No. 2008-524714
Patent Document 2: Japanese Patent Application Publication No. 2007-18083

### GENERAL DISCLOSURE

In a first aspect of the present invention, a device is provided. The device may include an order information acquisition unit configured to acquire order information including destination information indicating a destination for transporting perishables to be ordered. The device may include a transportation information acquisition unit configured to acquire transportation information including temperature and location information of perishables in transport. The device may include a temperature estimation unit configured to calculate, on the basis of the transportation information and the order information, an estimated temperature at the destination in a case where the perishables in transport are transported to the destination. The device may include a decision unit configured to decide whether to transport the perishables in transport to the destination on the basis of the estimated temperature. The device may include an instruction unit configured to provide instruction to transport the perishables in transport to the destination according to a result of the decision.

The order information may further include a type of the perishables to be ordered. The transportation information may further include a type of the perishables in transport. The decision unit may be configured to decide to transport the perishables in transport to the destination on condition that the type included in the order information matches the type included in the transportation information.

The order information may further include an arrival deadline of the perishables to be ordered. The device may include a time estimation unit configured to calculate, on the basis of the transportation information and the order information, an estimated time to the destination in a case where the perishables in transport are transported to the destination. When it is determined on the basis of the estimated time that the arrival deadline is able to be met, the decision unit may be configured to decide to transport the perishables in transport to the destination.

The temperature estimation unit may be configured to calculate the estimated temperature further on the basis of a refrigerated state of the perishables in transport.

The device may include an update instruction unit configured to, when temperature of perishables transported to the destination is higher than a target temperature, provide instruction to update at least one of a pre-cooling condition before start of transportation or a refrigeration condition during transportation.

The order information may further include an order amount of the perishables to be ordered. When the order amount exceeds a remaining amount obtained by subtracting an amount of ordered perishables from a total amount of the perishables in transport and stored perishables, the decision unit may be configured to decide not to accept an order corresponding to the order information.

When the order amount exceeds an amount of unordered perishables among the perishables in transport, the decision unit may be configured to decide to cause a transporter loading the perishables in transport to stop by at a perishables storage and replenish perishables.

When new estimated temperature estimated on the basis of new transportation information acquired while the perishables in transport are transported to the destination exceeds a target temperature at the destination, the decision unit may be configured to stop transporting the perishables in transport to the destination.

The order information acquisition unit may be configured to acquire a plurality of pieces of order information from a plurality of customers. The decision unit may be configured to decide, on the basis of the estimated temperature calculated for each of the plurality of pieces of order information, order information, of which a corresponding order is to be accepted, among the plurality of pieces of order information.

The decision unit may be configured to decide, further on the basis of a profit obtained when each of the plurality of pieces of order information is ordered, order information, of which a corresponding order is to be accepted, among the plurality of pieces of order information.

The device may include a presentation unit configured to present a price of the perishables in transport. The order information acquisition unit may be configured to acquire the order information corresponding to an order placed according to presentation of the price.

The decision unit may be configured to decide to transport, to a storage, perishables which are not able to be ordered during transportation.

The device may include a time estimation unit configured to calculate, on the basis of the transportation information and the order information, an estimated time to the destination in a case where the perishables in transport is transported to the destination. The decision unit may be configured to decide whether to transport the perishables in transport to the destination on condition that there is a margin that is equal to or higher than margin temperature between a target temperature at the destination and the estimated temperature, the margin temperature becoming smaller when the estimated time is shorter.

The transportation information acquisition unit may be configured to acquire the transportation information for each of a plurality of transporters. The decision unit may be configured to decide which transporter among the plurality of transporters is to be moved to the destination on the basis of the estimated temperature calculated on the basis of on the transportation information for each of the plurality of transporters.

In a second aspect of the present invention, a method is provided. The method may include acquiring, by a computer, order information including destination information indicating a destination for transporting perishables to be ordered. The method may include acquiring, by the computer, transportation information including temperature and location information of perishables in transport. The method may include calculating, by the computer, on the basis of the transportation information and the order information, an estimated temperature at the destination in a case where the perishables in transport are transported to the destination. The method may include deciding, by the computer, whether to transport the perishables in transport to the destination on the basis of the estimated temperature. The method may include providing, by the computer, instruction to transport the perishables in transport to the destination according to a result of the deciding.

In a third aspect of the present invention, a program executed by a computer is provided. The program may cause the computer to perform operations including acquiring order information including destination information indicating a destination for transporting perishables to be ordered. The program may cause the computer to perform operations including acquiring transportation information including temperature and location information of perishables in transport. The program may cause the computer to perform operations including calculating, on the basis of the transportation information and the order information, an estimated temperature at the destination in a case where the perishables in transport are transported to the destination. The program may cause the computer to perform operations including deciding whether to transport the perishables in transport to the destination on the basis of the estimated temperature. The program may cause the computer to perform operations including providing instruction to transport the perishables in transport to the destination according to a result of the deciding.

The summary clause does not necessarily describe all necessary features of the embodiments of the present invention. The present invention may also be a sub-combination of the features described above.

### BRIEF DESCRIPTION OF THE DRAWINGS

Fig. 1 illustrates a physical distribution processing system 10 according to the present embodiment together with a physical distribution system 20.
Fig. 2 illustrates a configuration of a transport processing device 150 according to the present embodiment.
Fig. 3 illustrates a configuration of an order processing device 160 according to the present embodiment.
Fig. 4 illustrates an operation flow of the order processing device 160 according to the present embodiment.
Fig. 5 illustrates an operation flow regarding order acceptance decision of the order processing device 160 according to the present embodiment.
Fig. 6 is a graph illustrating an example of an estimated temperature estimated by the order processing device 160 according to the present embodiment.
Fig. 7 is a graph illustrating an example of a method of updating the estimated temperature estimated by the order processing device 160 according to the present embodiment.
Fig. 8 is a graph illustrating an example of a pass/fail determination method of the estimated temperature estimated by the order processing device 160 according to the present embodiment.
Fig. 9 illustrates an example of a computer 2200 in which a plurality of aspects of the present invention may be embodied in whole or in part.

### DESCRIPTION OF EXEMPLARY EMBODIMENTS

Hereinafter, the invention will be described through embodiments of the invention, but the following embodiments do not limit the invention according to claims. In addition, not all of the combinations of features described in the embodiments are essential to the solving means of the invention.

Fig. 1 illustrates a physical distribution processing system 10 according to the present embodiment together with a physical distribution system 20. The physical distribution system 20 is a physical distribution network for transporting perishables. Herein, the perishables (also referred to as "fresh products") transported by the physical distribution system 20 may be fresh foods such as fruits and vegetables, marine products, and meat, and may be processed foods, tea leaves, beans, beverages (wine), other foods involving freshness deterioration, flowers and ornamental plants, and items (medicines or the like) other than the foods involving freshness deterioration.

In the physical distribution system 20, a plurality of transporters 140a and 140b transports perishables among a storage 100, a storage 110, a plurality of destinations 120a to 120d, and a plurality of storages 130a to 130c. The storage 100 is a physical distribution base warehouse that is operated by a producer of perishables, an association of producers, or the like and is arranged near the producer. The storage 100 stores perishables while keeping freshness by refrigerating or freezing the perishables. In the present drawing, only one storage 100 as the departure point of each transporter 140 is illustrated for convenience of description, but the physical distribution system 20 may include a plurality of storages 100 as the departure points of the transporter 140.

The storage 110 is a physical distribution base warehouse arranged in a region near a retailer, a consumer, or the like of perishables. The storage 110 is operated by a transportation company, a producer or an association thereof, a retailer, an association of consumers, or the like. The storage 110 stores perishables while keeping freshness by refrigerating or freezing the perishables. In the present drawing, only one storage 110 as the final arrival point of each transporter 140 is illustrated for convenience of description, but the physical distribution system 20 may include a plurality of storages 110 as the final arrival points of the transporter 140.

Each (also referred to as a "destination 120") of the plurality of destinations 120a to 120d is a transportation destination (place of delivery) of a product designated by an orderer such as a retailer or a consumer who orders perishables. The plurality of storages 130a to 130c (also referred to as a "storage 130") is similar to the storage 110.

Each (also referred to as a "transporter 140") of the plurality of transporters 140a and 140b is managed by a transportation company, and transports perishables among the storage 100, the storage 110, the plurality of destinations 120a to 120d, and the plurality of storages 130a to 130c. The transporter 140 is a vehicle, such as a truck, capable of carrying loads. In other embodiments, the physical distribution system 20 may use rail, a watercraft, an aircraft, or another transportation means in place of the transporter 140 or in conjunction with the transporter 140.

The physical distribution processing system 10 manages the physical distribution of the physical distribution system 20, and instructs each transporter 140 with respect to a destination (the destinations 120a to 120d or the like), a transit point (the storages 130a to 130c or the like), the type and amount of fresh products to be loaded, the type and amount of fresh products to be delivered to each destination, or the like. The physical distribution processing system 10 includes a transport processing device 150 and an order processing device 160.

The transport processing device 150 may be achieved by a server computer, a general-purpose computer, a workstation, a personal computer, and another computer, or may be achieved by a computer system in which a plurality of computers is connected. In addition, the transport processing device 150 may be achieved on a cloud computing system. The transport processing device 150 can communicate with each of the plurality of transporters 140 via a cellular network, a wireless WAN, or other wireless network. The transport processing device 150 is owned or managed by a transportation company. The transport processing device 150 performs operation management of the plurality of transporters 140, various instructions to the plurality of transporters 140, state collection of the plurality of transporters 140, and the like.

The order processing device 160 is connected to the transport processing device 150 via a wired network or a wireless network. The order processing device 160 may be achieved by a server computer, a general-purpose computer, a workstation, a personal computer, and other computers, or may be achieved by a computer system in which a plurality of computers is connected. In addition, the order processing device 160 may be achieved on a cloud computing system.

The order processing device 160 accepts an order for purchasing perishables from a retailer, a consumer, and the like. The order processing device 160 accepts, from each transporter 140, the transportation information including the temperature of the perishables in transport or the like, and decides which transporter 140 is to be headed to the destination 120, so that fresh perishables are delivered to the destination 120 of the order.

Herein, the order processing device 160 according to the present embodiment does not decide all destinations 120 at which the transporter 140 is to stop by before the transporter 140 departs from the storage 100, but decides a new destination 120 corresponding to the order for some or all perishables to be carried by the transporter 140 during carrying after the departure from the storage 100. That is, in the present embodiment, the transporter 140 and the refrigerating box loaded on the transporter 140 serve not only as a transportation means for carrying ordered perishables to the destination 120 but also as a "moving warehouse" for storing unordered perishables. Thereby, the order processing device 160 can reduce the number of transporters 140 required to deliver perishables to a customer as compared with a case where the transporter 140 is arranged each time an order is accepted. As a result, the order processing device 160 can reduce the total transportation distance of perishables. By reducing the total transportation distance of perishables, the order processing device 160 can also contribute to reduction of global warming gas emissions.

In the example of the present drawing, the transporter 140a and the transporter 140b load ordered and unordered perishables in the storage 100, and depart to the storage 110 as the final destination. During the movement of the transporter 140a and the transporter 140b, the order processing device 160 accepts one or more orders with each of one or more destinations 120 set as a delivery destination. The order processing device 160 acquires, via the transport processing device 150, transportation information including the temperature and location information of perishables in transport for each of the plurality of transporters 140. The order processing device 160 calculates the estimated temperature of perishables in a case where the perishables are transported to each destination 120, and decides the destination 120 at which each of the plurality of transporters 140 is to stop by so that the freshness of the perishables is not lost.

In the example of the present drawing, the order processing device 160 decides that the transporter 140a transports perishables to the destination 120a and the destination 120d and that the transporter 140b transports perishables to the destination 120b and the destination 120c. In addition, when the perishables in transport becomes insufficient, the order processing device 160 decides to cause the transporter 140b to stop by at the storage 130b and replenish perishables. The order processing device 160 transmits transport instructions to the plurality of transporters 140 via the transport processing device 150. Each transporter 140 stops by at one or more designated destinations 120 and the storage 110 and transports the remaining perishables to the storage 130 near a consumption place. The storage 110 may play a role of the storage 130.

According to the physical distribution processing system 10 described above, it is possible to flexibly set a destination according to an order after starting transportation of unordered perishables and transport the fresh products to the destination while keeping freshness.

Accordingly, in the present embodiment, even when the physical distribution system 20 does not have a facility for refrigerating and freezing perishables to be transported or has only a refrigerating and freezing facility that is not sufficient to maintain a constant low temperature state to the destination as the transporter 140, by using a refrigerating means such as a refrigerating box, the physical distribution system 20 can transport perishables within a time during which the perishables can be kept fresh.

Fig. 2 illustrates the configuration of the transport processing device 150 according to the present embodiment. The transport processing device 150 includes a transportation information reception unit 200, a transportation information transmission unit 210, a transport instruction reception unit 220, a transport instruction transmission unit 230, and a transport processing unit 240.

The transportation information reception unit 200 receives transportation information indicating the transportation state of perishables from each of the plurality of transporters 140. The transportation information from each transporter 140 includes the temperature and the location information of perishables in transport by the transporter 140. Herein, the temperature of perishables may be a value obtained by measuring the internal temperature of the refrigerating means used for transporting the perishables. In addition, the transportation information may include at least one of the type or the amount of perishables in transport. In addition, the transportation information may include information regarding a refrigerated state such as a packed state of perishables. The transportation information transmission unit 210 transmits the transportation information for each of the plurality of transporters 140 to the order processing device 160.

The transport instruction reception unit 220 receives, from the order processing device 160, a transport instruction instructing to which destination 120 each of the plurality of transporters 140 is to transport perishables. The transport instruction transmission unit 230 transmits the transport instruction for each transporter 140 to the corresponding transporter 140.

The transport processing unit 240 performs a transport process such as management of the transportation of the plurality of transporters 140 and various processes accompanying the management. The transport processing unit 240 may be connected to the transportation information reception unit 200 and the transportation information transmission unit 210, and may add additional information regarding the transportation state of perishables to the transportation information received from the transportation information reception unit 200 and transmit the resulttransportation to the order processing device 160 via the transportation information transmission unit 210. For example, the transport processing unit 240 may record a history of the type, the amount, or the like of the perishables which each transporter 140 is instructed to load and unload, add information, which is recorded by the transport processing unit 240, such as the type, the amount, or the like of the perishables currently in transport by the corresponding transporter 140 to the transportation information received from each transporter 140 and including the temperature and location information of the perishables in transport, or the like, and transmit the result to the order processing device 160 via the transportation information transmission unit 210.

The transport processing unit 240 may be connected to the transport instruction reception unit 220 and the transport instruction transmission unit 230, and may add additional information regarding transport to the transport instruction received from the order processing device 160 and transmit the result to the corresponding transporter 140 via the transport instruction transmission unit 230. For example, the transport processing unit 240 may add the designation of a driver for each section of the movement path, the recommended route to each destination, and other additional instructions or related information to the transport instruction, and transmit the result to the corresponding transporter 140.

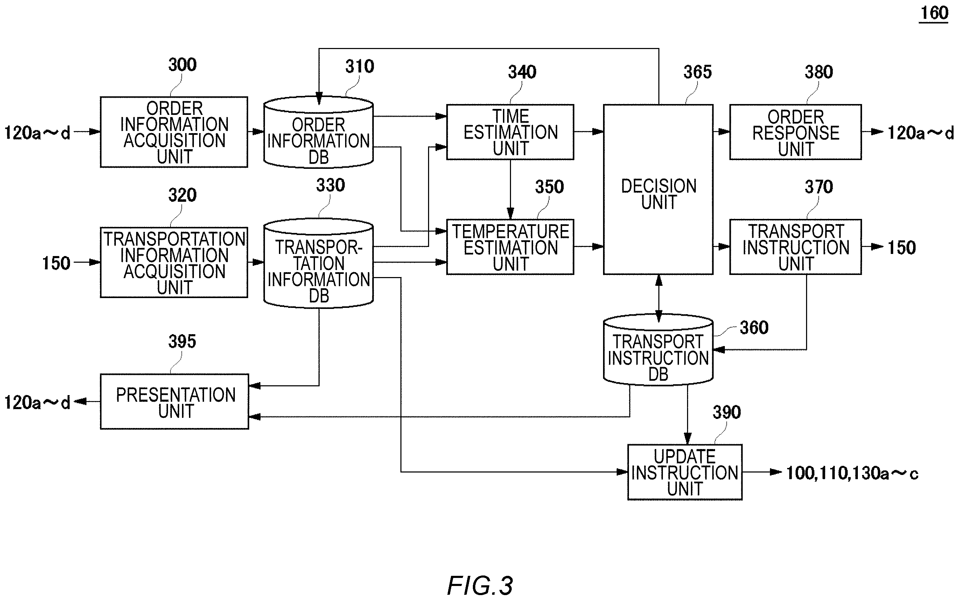

Fig. 3 illustrates the configuration of the order processing device 160 according to the present embodiment. The order processing device 160 includes an order information acquisition unit 300, an order information database (DB) 310, a transportation information acquisition unit 320, a transportation information DB 330, a time estimation unit 340, a temperature estimation unit 350, a transport instruction DB 360, a decision unit 365, a transport instruction unit 370, an order response unit 380, an update instruction unit 390, and a presentation unit 395.

The order information acquisition unit 300 acquires order information including destination information indicating the destination 120 to which perishables to be ordered are transported. As the destination information, the location information of the destination such as a set of longitude and latitude may be used as an example. In addition, the order processing device 160 may prepare a table, in which place names and location information are associated with each other, such as "α market: A degrees a minutes east longitude, B degrees b minutes north latitude, and β warehouse: C degrees c minutes east longitude, D degrees d minutes north latitude". In this case, the order acquisition unit 300 may acquire the place name designated as the destination as the destination information and convert the place name into the destination information represented by the location information by using the table. The order information may include at least one of the type or the order amount of perishables to be ordered, and may further include the arrival deadline of the perishables to be ordered. The data indicating the type of perishables may be coded as, for example, "Tomato: 1, cabbage: 2". For example, the order information acquisition unit 300 may use a web page for perishables sale and receive the order information input by the customer from a computer that processes the sale web page, and may receive, from an order system, the order information which is input to the order system by a call center operator or the like receiving contact from the customer by telephone or other means. The order information DB 310 is connected to the order information acquisition unit 300 and stores the order information acquired by the order information acquisition unit 300.

The transportation information acquisition unit 320 acquires the transportation information for each of the plurality of transporters 140a and 140b from the transport processing device 150. The transportation information DB 330 is connected to the transportation information acquisition unit 320 and stores the transportation information acquired by the transportation information acquisition unit 320.

The time estimation unit 340 is connected to the order information DB 310 and the transportation information DB 330. On the basis of the transportation information of each transporter 140 stored in the transportation information DB 330 and the order information of each order stored in the order information DB 310, the time estimation unit 340 calculates an estimated time to the destination 120 in a case where the perishables in transport are transported to the destination 120. The time estimation unit 340 searches for a path on which each transporter 140 moves from the current position to the destination 120 by using the location information of each transporter 140 included in the transportation information from the plurality of transporters 140 and the destination information included in the order information for each of one or more orders, and calculates an estimated time required for the movement of the path. The location information of the transporter 140 may be, for example, a set of latitude and longitude at which the transporter 140 is present. Such location information may be acquired by using a global positioning system (GPS) in each transporter 140.

The temperature estimation unit 350 is connected to the order information DB 310, the transportation information DB 330, and the time estimation unit 340. The temperature estimation unit 350 calculates, on the basis of the transportation information of each transporter 140 and the order information of each order, an estimated temperature at the destination 120 in a case where the perishables in transport are transported to the destination 120. The temperature estimation unit 350 accepts, from the time estimation unit 340, the estimated time to each destination 120, and calculates the estimated temperature at each destination 120 by using the estimated time to each destination 120. Alternatively, the temperature estimation unit 350 may calculate the estimated time to each destination 120 for the path given in advance to each transporter 140 in a manner similar to that of the time estimation unit 340, and calculate the estimated temperature at each destination 120 by using the estimated time. By the temperature estimation unit 350 calculating the estimated temperature at the destination 120, the decision unit 365 can decide whether the perishables arrive at the destination 120 without being deteriorated. As a result, the order processing device 160 can suppress deteriorated perishables from arriving at the destination 120, and can enable reduction of the scrap of the perishables.

The transport instruction DB 360 is connected to the decision unit 365 and the transport instruction unit 370. The transport instruction DB 360 stores one or more transport instructions issued to each of the plurality of transporters 140. The decision unit 365 is connected to the time estimation unit 340, the temperature estimation unit 350, and the transport instruction DB 360. The decision unit 365 decides whether to transport the perishables in transport to the destination 120 on the basis of the estimated temperature at the destination 120 in a case where the perishables in transport are transported to each destination 120.

Herein, when the perishables are transported by the plurality of transporters 140, for each of the plurality of transporters 140, the decision unit 365 decides whether to transport the perishables in transport to the destination 120 on the basis of the estimated temperature at the destination 120 in a case where the perishables are transported to the destination 120 of each order. Thereby, the decision unit 365 decides which transporter 140 among the plurality of transporters 140a and 140b is to be moved to the destination 120 on the basis of the estimated temperature calculated on the basis of the transportation information for each of the plurality of transporters 140a and 140b.

When the transportation information and the order information include information indicating the type of perishables, the decision unit 365 decides to transport the perishables in transport to the destination 120 included in the order information on condition (requirement) that the type included in the order information matches the type included in the transportation information. Herein, when the transporter 140 transports a plurality of types of perishables, the transportation information of the transporter 140 includes information indicating the plurality of types. In this case, on condition that either of the plurality of types included in the transportation information matches the type included in the order information, the decision unit 365 decides to transport the perishables to the destination 120 included in the order information. Note that, for example, when the physical distribution system 20 transports only a single type of perishables, the information indicating the type of perishables may not be included in the transportation information and the order information, and the decision unit 365 may omit comparison of the information indicating the type of perishables.

In a case where the order information includes the arrival deadline, when it is determined on the basis of the estimated time to the destination 120 included in the order information that the arrival deadline can be met, with the determination as a requirement, the decision unit 365 decides to transport the perishables in transport to the destination 120. When the arrival deadline cannot be met, the decision unit 365 may decide not to accept the order. The decision unit 365 may delete, from order placement information DB, the order decided not to be accepted.

In the present embodiment, the time estimation unit 340, the temperature estimation unit 350, and the decision unit 365 are illustrated as separate components, but these units operate closely to generate a transportation plan of perishables. Thus, each of the time estimation unit 340 and the temperature estimation unit 350 may be integrated with the decision unit 365, or the time estimation unit 340 and the temperature estimation unit 350 may be integrated. The close operation of the time estimation unit 340, the temperature estimation unit 250, and the decision unit 365 enables the order processing device 160 to cause perishables to arrive at the destination 120 in a fresher state. As a result, the order processing device 160 can enable further reduction of the scrap of perishables.

A transport instruction unit 370 is connected to the decision unit 365. For each order, the transport instruction unit 370 instructs the transporter 140 in charge of the order to transport the perishables in transport to the destination 120 of the order according to the decision result by the decision unit 365. The transport instruction unit 370 transmits such a transport instruction to the transporter 140 in charge via the transport processing device 150. In addition, the transport instruction unit 370 stores the transport instruction in the transport instruction DB 360. Since the transport instruction unit 370 transmits the transport instruction to the transporter 140 in transport, the order processing device 160 can reduce the number of transporters 140 required to deliver perishables to the customer, as compared with a case where the transporter 140 is arranged each time an order is accepted. As a result, the order processing device 160 can reduce the total transportation distance of perishables. By reducing the total transportation distance of perishables, the order processing device 160 can also contribute to reduction of global warming gas emissions.

The order response unit 380 is connected to the decision unit 365. For the order for which it is decided to transport perishables to the destination 120 among a plurality of orders, the order response unit 380 transmits a response indicating the acceptance of the order to the customer. In addition, for the order not decided to transport the perishables in transport to the destination 120 (in other words, the order for which it is decided not to transport perishables in transport to the destination 120 thereof) among the plurality of orders, the order response unit 380 transmits, to the customer, a response indicating that the order is not accepted. Herein, the order response unit 380 may transmit this response to the computer that processes the sale web page or may transmit the response as an e-mail to the mail address of the customer. By the order response unit 380 performing the above-described transmission to the customer, the order processing device 160 can meet the demand for perishables and reduce the scrap of perishables.

The update instruction unit 390 is connected to the transportation information DB 330 and the transport instruction DB 360. The update instruction unit 390 issues an update instruction for improving the physical distribution of perishables on the basis of a state when the transporter 140 arrives at the destination 120. When the temperature of the perishables transported to the destination 120 is higher than a target temperature, the update instruction unit 390 instructs the storage 100, the storage 110, or at least one of the storages 130a to 130c to update at least one of a pre-cooling condition before the start of transportation or a refrigeration condition during transportation. Additionally or alternatively, when the estimated temperature at the destination 120 in a case where the perishables in transport are transported to each destination 120 is higher than the target temperature, the update instruction unit 390 may instruct the storage 100, the storage 110, or at least one of the storages 130a to 130c to update at least one of the pre-cooling condition before the start of transportation or the refrigeration condition during transportation. When the update instruction unit 390 performs the above-described instruction, the order processing device 160 can cause the perishables to be pre-cooled under a more appropriate condition or to be refrigerated under a more appropriate condition during transportation, and can enable reduction of the scrap of the perishables by suppressing the deterioration of the perishables.

The presentation unit 395 is connected to the transportation information DB 330 and the transport instruction DB 360. The presentation unit 395 presents the price of the perishables in transport in order to sell the perishables. By using the transportation information stored in the transportation information DB 330, the presentation unit 395 according to the present embodiment acquires the type and amount of the perishables in transport. The presentation unit 395 uses the transportation information stored in the transport instruction DB 360 to exclude, from the perishables in transport, the perishables of which the destination is decided and calculates the type and amount of perishables of which the destination is not decided (that is, unordered perishables). Then, the presentation unit 395 widely presents the type, remaining amount, and price of perishables of which the destination is not decided. Thereby, the order information acquisition unit 300 can acquire the order information corresponding to the order placed according to the presentation of the price. The order processing device 160 can meet a potential demand for perishables by using the presentation unit 395, and can enable reduction of the scrap of perishables.

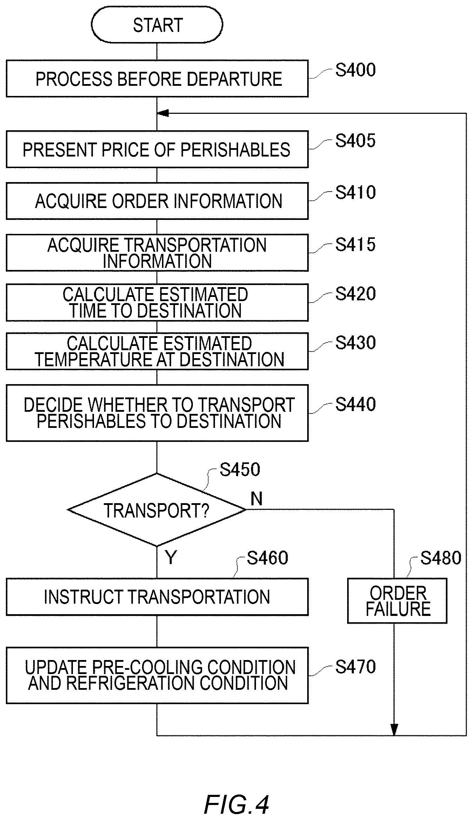

Fig. 4 illustrates an operation flow of the order processing device 160 according to the present embodiment. In S400 (step 400), the order processing device 160 performs various types of processes before each transporter 140 departs from the storage 100. The order processing device 160 may also accept an order for perishables even before the departure of each transporter 140. In this case, the order processing device 160 may perform the following operation.

The order information acquisition unit 300 acquires order information regarding an order for perishables before transportation and stores the order information in the order information DB 310. For the transporter 140 before departure, the transportation information acquisition unit 320 acquires transportation information including information that the transporter 140 is before departure, the location information of the storage 100, and the like, and stores the transportation information in the transportation information DB 330. The information on whether the transporter 140 is before departure may be indicated by, for example, a Boolean value. On the basis of the transportation information of each transporter 140 before departure and the order information of each order, the time estimation unit 340 calculates an estimated time to the destination 120 in a case where the product is transported from the storage 100 to the destination 120. Herein, the time estimation unit 340 may calculate the total estimated time of the estimated time required to load the perishables on the transporter 140 and the estimated time required to move from the storage 100 to the destination 120. Note that the estimated time required to load the perishables on the transporter 140 may be a predetermined time such as 30 minutes, for example.

On the basis of the transportation information of each transporter 140 before departure and the order information of each order, the temperature estimation unit 350 calculates an estimated temperature at each destination 120 in a case where the perishables are transported from the storage 100 to each destination 120. The decision unit 365 decides whether to transport the perishables to the destination 120 on the basis of the estimated temperature at the destination 120. Herein, the decision unit 365 may perform this decision further on the basis of each condition described with respect to Fig. 3, and may further limit the total amount of the perishables loaded on each transporter 140 so as not to exceed the maximum loading capacity of each transporter 140. According to the decision result, the transport instruction unit 370 instructs, via the transport processing device 150, the transporter 140 to be in charge of the order to transport the perishables to the destination 120 of the order. The transport instruction DB 360 stores each transport instruction for an order before departure.

The transport instruction unit 370 instructs the transporter 140 which is before departure and positioned in the storage 100 to load unordered perishables within a range not exceeding the maximum loading capacity in addition to the perishables corresponding to the total amount corresponding to all orders taken charge of by the transporter 140. When the transport instruction unit 370 instructs loading of unordered perishables, the order processing device 160 can cope with future order placement, and as a result, the number of transporters 140 required to deliver the perishables to the customer can be reduced as compared with a case where the transporter 140 is arranged each time an order is accepted. As a result, the order processing device 160 can reduce the total transportation distance of perishables. By reducing the total transportation distance of perishables, the order processing device 160 can also contribute to reduction of global warming gas emissions. Herein, the transport instruction unit 370 may instruct the transporter 140 to load perishables having the type and the amount set in advance by the producer, the transportation company, or the like. In addition, the transport instruction unit 370 may perform demand prediction by using a history or the like of orders accepted in the past for the perishables in transport, and perform instruction on the type and amount of unordered perishables to be loaded into the transporter 140 on the basis of the result.

In response to such a transport instruction, the transportation company loads, onto each transporter 140 positioned in the storage 100, the perishables corresponding to the total amount corresponding to all orders taken charge of by the transporter 140, and loads unordered perishables within a range not exceeding the maximum loading capacity. Then, the transportation company causes the transporter 140 in charge of the order before departure to depart toward the destination 120 of the order and causes the transporter 140 that has not accepted the order before departure to depart toward the storage 110 which is the final arrival point.

In S405, the presentation unit 395 presents, to the distributor, the retailer, the consumer, and the like, the type, price, and the like of the perishables in transport, and in S410, the order information acquisition unit 300 acquires the order information corresponding to the order placed according to the presentation of the price. Herein, the order processing device 160 may perform a process of selling perishables in transport in an auction format or a reverse auction format. In the case of using the auction format, the presentation unit 395 presents the current selling price of the perishables in transport, and the order information acquisition unit 300 acquires a plurality of pieces of order information from the plurality of orderers. Each of the plurality of pieces of order information may include a purchase price desired by each customer. Note that the presentation unit 395 may update the current selling price to the highest purchase price and present the price, and further solicit orders with higher prices. In the case of using the reverse auction format, the presentation unit 395 presents a bid price of perishables to a person scheduled to order, and the order information acquisition unit 300 acquires the order information corresponding to an order placed according to the bid made by the presentation of the price. The order information acquisition unit 300 stores the acquired order information in the order information DB 310. Since it is possible to meet a potential demand for perishables by the presentation unit 395, the order processing device 160 can enable reduction of the scrap of perishables.

In S415, the transportation information acquisition unit 320 acquires, from the transport processing device 150, the transportation information for each of the plurality of transporters 140 which have departed from the storage 100 and are moving, and stores the transportation information in the transportation information DB 330. In S420, on the basis of the transportation information of each transporter 140 and the order information of each order stored in the order information DB 310, the time estimation unit 340 calculates an estimated time to the destination 120 in a case where the perishables in transport are transported to the destination 120.

Herein, for the transporter 140 which already has at least one destination 120 for the accepted order, the time estimation unit 340 may be able to calculate an estimated time in the case of traveling around two or more destinations 120 in which the destination 120 for at least one unaccepted order is added. For example, the time estimation unit 340 generates one or more assignment candidates for causing either of the plurality of transporters 140 to take charge of each of at least one unaccepted order. Herein, the time estimation unit 340 may generate an assignment candidate for causing either of the plurality of transporters 140 to randomly take charge of each of at least one unaccepted order or may generate an assignment candidate for causing the transporter 140 already in charge of an order, which has a scheduled path to follow each destination 120 closer to the destination 120 of the unaccepted order, to take charge of the unaccepted order.

Then, the time estimation unit 340 calculates, for each assignment candidate, an optimal path along which the transporter 140 in charge of the unaccepted order follows two or more destinations 120 from the current location. Since this is a traveling salesman problem, the time estimation unit 340 can solve the problem with a known solution. Then, the time estimation unit 340 calculates an estimated time to each destination 120 in a case where two or more destinations 120 are followed in this order.

When the order amount of the perishables in the order that the transporter 140 is to be newly in charge of exceeds the amount of the unordered perishables of the same type loaded on the transporter 140, the time estimation unit 340 may calculate a path for stopping by at any storage 130 to replenish the perishables. In addition, when a predetermined reference amount or more of perishables remains after following all the destinations 120, the time estimation unit 340 may calculate an estimated time to the storage 110. By the time estimation unit 340 calculating the above-described path, the order processing device 160 can load an appropriate amount of perishables on the transporter 140, and can reduce the total transportation distance of the perishables. In addition, the order processing device 160 enables reduction of the scrap of perishable by storing excessive perishable in the storage 110.

In S430, for each assignment candidate, the temperature estimation unit 350 calculates, on the basis of the transportation information of each transporter 140 and the order information of each order, the estimated temperature at the destination 120 in a case where the perishables in transport are transported to the destination 120. In the present embodiment, for each transporter 140, the temperature estimation unit 350 estimates to what extent the temperature of the perishables rises after the lapse of the estimated time on the basis of the temperature of the perishables in transport included in the transportation information and the estimated time calculated from the transportation information and the order information, and regards the temperature as the estimated temperature. By the temperature estimation unit 350 calculating the estimated temperature at each destination 120, the decision unit 365 can appropriately decide the delivery of the perishables and can enable reduction of the scrap of the perishables.

In S440, the decision unit 365 decides whether to transport the perishables in transport to the destination 120 on the basis of the estimated temperature at the destination 120 in a case where the perishables in transport are transported to each destination 120. The decision unit 365 decides whether each transporter 140 transports the perishables to each destination 120 according to each assignment candidate on the basis of the estimated temperature, which is calculated for each assignment candidate, at each of one or two or more destinations 120 included in each assignment candidate. As a result of the decision unit 365 deciding whether transportation can be performed on the basis of the estimated temperature at each destination 120, the order processing device 160 can suppress deteriorated perishables from arriving at each destination 120, and can enable reduction of the scrap of the perishables.

Herein, in each assignment candidate, when the estimated temperature of the perishables transported to any of the destinations 120 is higher than the target temperature, the transportation by the assignment candidate cannot keep the freshness of the perishables, and thus the decision unit 365 does not adopt the assignment candidate. The decision unit 365 may adopt the assignment candidate on condition that the estimated temperature is equal to or lower than the target temperature at any of the destinations 120. When is a plurality of adoptable assignment candidates, the decision unit 365 may select an assignment candidate to be determined to be optimal by using an evaluation function including a cost or the like. As a result, the order processing device 160 can reduce the total transportation distance of the perishables.

The decision unit 365 may decide to transport the perishables that cannot be ordered during transportation to the storage 110. Thus, for the transporter 140 transporting unordered perishables, the decision unit 365 may select the assignment candidate on condition that the estimated temperature in a case where the perishables are transported to the storage 110 is equal to or lower than the target temperature. Note that, when the amount of unordered perishables in transport are equal to or less than a predetermined allowable scrap, the decision unit 365 may allow the estimated temperature in a case where the perishables are transported to the storage 110 to exceed the target temperature. As a result of the above-described decision by the decision unit 365, the order processing device 160 can enable balancing between the reduction in the scrap of perishables and the reduction in the total transportation amount.

In the above description, the decision unit 365 may adopt the assignment candidate on the premise that the type and amount of perishables, the arrival deadline, and other conditions can be satisfied. When the order amount exceeds the amount of unordered perishables among the perishables in transport, the decision unit 365 may decide to cause the transporter 140 to replenish the perishables by adopting an assignment candidate including a path for causing the transporter 140 loading the perishables in transport to stop by at at least one storage 130 and replenish the perishables. As a result, the order processing device 160 can load an appropriate amount of perishables on the transporter 140, and can reduce the total transportation distance of the perishables.

For the plurality of orders in the auction format, the decision unit 365 may decide, on the basis of the estimated temperature calculated for each of the plurality of pieces of order information, order information, of which a corresponding order is to be accepted, among the plurality of pieces of order information. For example, when the estimated temperature in the case of in transport to the destination 120 exceeds the target temperature, the decision unit 365 may decide not to accept the order regardless of the level of the purchase price. As a result, the order processing device 160 can reduce the chance of providing deteriorated perishables to the demander. Then, the decision unit 365 may decide to accept an order that presents the highest purchase price among acceptable orders. Alternatively, the decision unit 365 may decide, on the basis of only on the level of the purchase price but also on the profit obtained when each of the plurality of pieces of order information is accepted, order information, of which the corresponding order is to be accepted, among the plurality of pieces of order information. For example, the decision unit 365 may calculate an expected profit by subtracting a cost such as a transportation cost from the purchase price of each order, and select an assignment candidate having a larger expected profit. When it is possible to accept the order in the auction format, the order processing device 160 can further increase the profit obtained by selling the perishables in transport.

For the order for which it is decided to be accepted and transport the perishables ("Y" in S450 in the drawing), in S460, the transport instruction unit 370 transmits a transport instruction to transport the perishables in transport to the destination 120 to the transporter 140 in charge of the order. In addition, the order response unit 380 transmits, to the customer, a response indicating the acceptance of the order.

In S470, for the accepted order, when the position indicated by the location information included in the transportation information of the transporter 140 stored in the transportation information DB 330 reaches the destination 120 included in the transport instruction stored in the transport instruction DB 360, the update instruction unit 390 determines that the transporter 140 arrives at the destination 120. When it is determined that the transporter 140 arrives at the destination 120, the update instruction unit 390 confirms that the temperature of the perishables transported to the destination 120 is equal to or lower than the target temperature. When the temperature of the perishables transported to the destination 120 is higher than the target temperature, the update instruction unit 390 may instruct the storage 100 to update the pre-cooling condition in order to further lower the temperature of the perishables before shipping. In addition, when the temperature of the perishables transported to the destination 120 is higher than the target temperature, the update instruction unit 390 may instruct the storage 100, the transporter 140, or the transport processing device 150 to increase the amount of the packaging material used for packaging of a storage box or the like for carrying the perishables, increase the amount of a refrigerant to be put in the refrigerating box or the like, and update other refrigeration conditions in order to slow the increase in the temperature during transportation. Thereby, the order processing device 160 can more reliably keep the freshness of the perishables in the next or subsequent transportation. That is, when the update instruction unit 390 performs the above-described instruction, the order processing device 160 can cause the perishables to be pre-cooled under more appropriate condition or to be refrigerated under a more appropriate condition during transportation, and can enable reduction of the scrap of the perishables by suppressing the deterioration of the perishables. Note that for the order decided not to be accepted ("N" in S450 in the drawing), the order response unit 380 transmits, to the customer, a response indicating that the order fails.

According to the order processing device 160 described above, after the transportation of unordered perishables is started, the destination 120 is set or added according to the order, and the transportation to one or two or more destinations 120 can be instructed in the order in which the temperature of the perishables can be kept at the target temperature or less. In addition, when conditions such as the type, amount, and arrival deadline of perishables are included in the order information and the transportation information, the order processing device 160 can instruct transportation to the destination 120 so that the conditions can be satisfied.

According to the order processing device 160, even while using a transportation method in which the temperature of the perishables gradually increases during transportation without using a freezing or refrigerating function that consumes electricity or the like, it is possible to transport the perishables to each destination 120 while keeping the temperature of the perishables at the target temperature or lower. Thereby, the order processing device 160 can reduce the energy consumption amount in each transporter 140 and increase an energy efficiency, thereby contributing to the maintenance of the global environment.

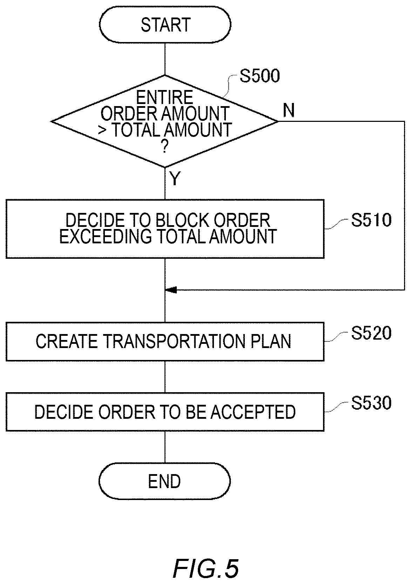

Fig. 5 illustrates an operation flow regarding order acceptance decision of the order processing device 160 according to the present embodiment. The operation flow of the present drawing may be performed in S440 of Fig. 4.

When the order amount of the newly accepted order exceeds the remaining amount obtained by subtracting the amount of the ordered perishables from the total amount of the perishables in transport and the stored perishables ("Y" in S500), the decision unit 365 decides not to accept the order corresponding to the order information (S510). Thereby, the decision unit 365 can create the transportation plan while excluding in advance an unacceptable order that exceeds the remaining amount of unordered perishables, and can reduce a calculation amount for creating the transportation plan.

In S520, the order processing device 160 creates the transportation plan that satisfies the accepted order and satisfies as many unaccepted orders except the excluded orders as possible in the number of orders or the order amount. As illustrated in Fig. 4, the order processing device 160 according to the present embodiment does not change the assignment of the accepted order to each transporter 140, generates a plurality of assignment candidates for assigning an unaccepted order to each transporter 140, and recalculates the optimal path of each transporter 140 in each assignment candidate (S420). Then, the order processing device 160 decides an assignment candidate to be adopted among the plurality of assignment candidates (S440). Alternatively, the order processing device 160 may generate the transportation plan by various other methods as exemplified below.

For each transporter 140, the order processing device 160 may determine whether the destination 120 of the unaccepted order can be added between any two destinations 120 of the accepted order without changing the order of following the destination 120 of the accepted order. According to the present method, it is not necessary to recalculate an optimal path in which each transporter 140 follows two or more destinations 120 each time an order is accepted, and a calculation amount can be reduced. In addition, since the path is not greatly changed, the driver of each transporter 140 can easily cope with the addition of the destination 120.

The order processing device 160 may recalculate the assignment of accepted orders and unaccepted orders for each transporter 140. That is, the time estimation unit 340 generates a plurality of assignment candidates for distributing a plurality of orders including the accepted order and the unaccepted order to the plurality of transporters 140 without being bound by the assignment of the accepted order to each transporter 140 at the current time point, and the decision unit 365 selects the assignment candidate to be adopted from these assignment candidates. According to the present method, since the entire optimization is performed each time an order is accepted, the calculation amount is increased, but the transportation cost can be further reduced. Furthermore, the order processing device 160 can further reduce the total transportation distance of perishables, and as a result, can also contribute to reduction of global warming gas emission.

In S530, when the unordered order can be embedded into the transportation plan, the decision unit 365 decides to accept the order. The decision unit 365 decides not to accept the order decided not to accept in S510 and the order not able to be embedded into the transportation plan in S520.

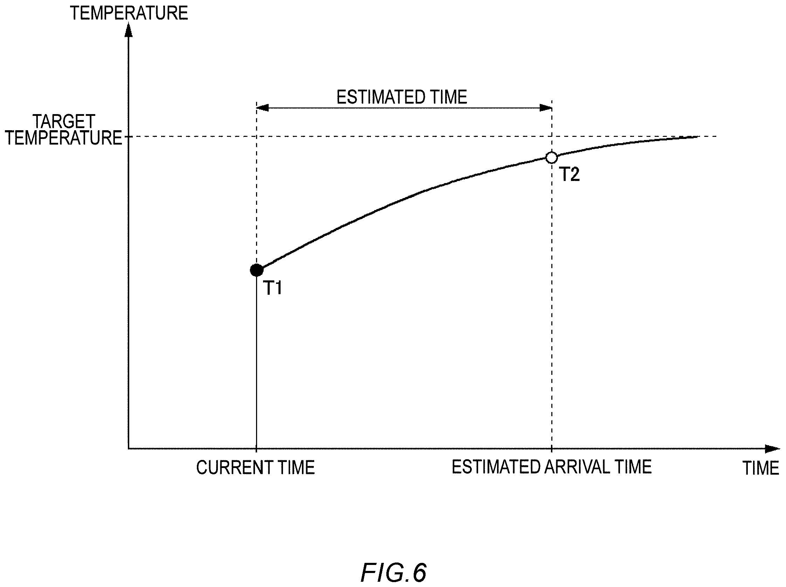

Fig. 6 is a graph illustrating an example of the estimated temperature estimated by the order processing device 160 according to the present embodiment. In the present drawing, a horizontal axis is set as time, a vertical axis is set as temperature, and an example of the temperature change of the perishables is illustrated which is estimated from the current temperature of the perishables included in the transportation information by the temperature estimation unit 350.

When a refrigerating means such as a refrigerating box is used, according to the thermal conductivity of the wall separating the outside and the inside of the refrigerating means, the thickness of the wall, the surface area of the refrigerating means, and a temperature difference between the inside and the outside of the refrigerating means, the temperature estimation unit 350 can calculate the amount of heat conveyed from the outside to the inside of the refrigerating means per unit time according to Fourier's law. In addition, the temperature estimation unit 350 can calculate the temperature change amount of the stored object (perishables, refrigerants, or the like) in a case where a certain amount of heat is conveyed to the inside of the refrigerating means from the specific heat and mass of the stored object stored inside the refrigerating means. By using this relationship, the temperature estimation unit 350 can mathematically calculate the internal temperature of the refrigerating means after a certain elapsed time from the internal temperature of the refrigerating means and the external temperature of the refrigerating means. Alternatively, the temperature estimation unit 350 may estimate the internal temperature of the refrigerating means by statistical processing, machine learning, or the like by using the history of temperature changes when the perishables was transported in the past. The temperature estimation unit 350 may treat the internal temperature of the refrigerating means calculated in this manner as the estimated temperature of the perishables.

Herein, the temperature estimation unit 350 may use a predetermined constant temperature as the external temperature of the refrigerating means. For example, the temperature estimation unit 350 may use, as the external temperature of the refrigerating means, a standard temperature determined according to the season, the weather, and others, an outside air temperature measured at one time point such as a time point before departure in the transporter 140, the air temperature of a region where the transporter 140 moves, or the like. In addition, when the transportation information from the transporter 140 includes the current external temperature of the refrigerating means in a luggage compartment, the temperature estimation unit 350 may use the current temperature of the luggage compartment as the external temperature of the refrigerating means.

The temperature estimation unit 350 may calculate the estimated temperature further on the basis of the refrigerated state of the perishables in transport. Herein, the refrigerated state differs depending on the type of the refrigerating means and the method of using the refrigerating means. For example, the thermal conductivity of the wall, the thickness of the wall, and the surface area of the refrigerating means vary depending on the type of the refrigerating means. When the refrigerant is placed in the refrigerating means, the heat capacity of the stored object is increased, and the temperature rise is suppressed. In addition, when the perishables are further covered with the packaging material in the refrigerating means, the amount of heat per unit time conveyed from the outside to the stored object decreases. Therefore, the order processing device 160 may acquire the transportation information including the refrigerated state which is at least one of the type of refrigerating means used for transportation of perishables or a method of using the refrigerating means. In this case, when the transportation information includes the type of the refrigerating means, the temperature estimation unit 350 may calculate the temperature change of the stored object by using a parameter for each type of the refrigerating means in consideration of the thermal conductivity and the thickness of the wall of the refrigerating means and the surface area of the refrigerating means. In addition, when the transportation information includes the method of using the refrigerating means, the temperature estimation unit 350 may perform adjustment such as increasing the heat capacity of the stored object or decreasing the amount of heat per unit time conveyed from the outside to the stored object.

When the transporter 140 unloads a part of the perishables at the destination 120, the stored object in the refrigerating means decreases, and the heat capacity of the stored object decreases. When the transporter 140 replenishes perishables in the storage 130, the stored object in the refrigerating means increases, and the heat capacity of the stored object increases. Furthermore, since the temperature of the perishables to be replenished is lower than the temperature of the perishables in transport, the average temperature of the entire stored object decreases. In order to cope with such an event, the temperature estimation unit 350 may calculate the temperature change of the perishables by changing at least one parameter of the heat capacity parameter or the temperature of the stored object each time the transporter 140 stops by at the destination 120 or the storage 130.

In the present drawing, the time estimation unit 340 calculates an estimated time until the transporter 140 arrives at the destination 120 on the basis of the location information of the transporter 140 at a "current time" in the present drawing. The temperature estimation unit 350 calculates an estimated temperature T2 of the perishables after the lapse of the estimated time from the current time on the basis of the temperature T1 of the perishables at the current time as described above. The decision unit 365 decides to transport the perishables to the destination 120 on condition that the estimated temperature T2 at the destination 120 is equal to or lower than a target temperature Tt. Note that, since a preferable storage temperature differs for each type of perishables, the decision unit 365 may use different target temperatures according to the type of perishables to be carried to the destination 120.

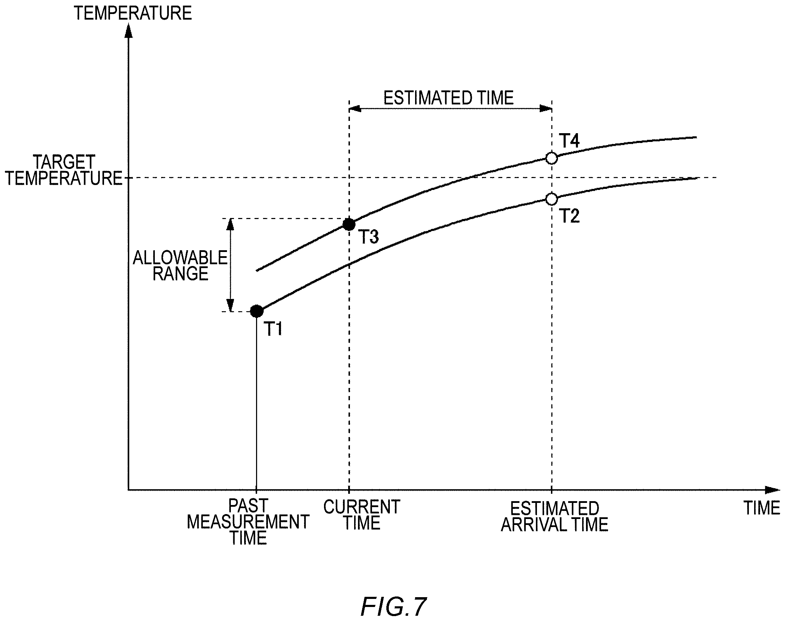

Fig. 7 is a graph illustrating an example of a method of updating the estimated temperature estimated by the order processing device 160 according to the present embodiment. In the present drawing, a horizontal axis is set as time, a vertical axis is set as temperature, and an example of the temperature change of the perishables is illustrated which is estimated from the current temperature of the perishables included in the transportation information by the temperature estimation unit 350.

In the present drawing, the temperature estimation unit 350 calculates the estimated temperature T2 at the destination 120 on the basis of the transportation information including the temperature T1 of the perishables at the "past measurement time" in the present drawing. Subsequently, the temperature estimation unit 350 acquires temperature T3 of perishables at the current time from the transportation information at the "current time" in the drawing.

Herein, the temperature estimation unit 350 may determine whether the temperature T3 at the current time is within a predetermined allowable range from the estimated temperature at the "current time" estimated at the "past measurement time". When the temperature T3 is out of the allowable range with respect to the estimated temperature at the "past measurement time", the estimated temperature cannot be appropriately calculated. Thus, the temperature estimation unit 350 notifies the manager of the corresponding transporter 140, transport processing device 150, or order processing device 160 of the abnormality. In response to this, the order processing device 160 may instruct the driver of the transporter 140 to confirm the packed state of the perishables. As the content of the instruction, it can be instructed to confirm whether the opening/closing port of the refrigerating means is not kept open, whether a refrigerating means different from the instruction is not used, whether a scheduled amount of perishables is stored in the refrigerating means, whether a refrigerant has been forgotten to be put, or the like.

The temperature estimation unit 350 calculates an estimated temperature T4 of the perishables after the lapse of the estimated time of transportation from the current time to the destination 120 on the basis of the temperature T3 of the perishables at the current time. This estimated temperature T4 is an updated value of the estimated temperature T2 at the "past measurement time". The decision unit 365 decides to transport the perishables to the destination 120 on condition that the estimated temperature T4 at the destination 120 is equal to or lower than the target temperature Tt. By the temperature estimation unit 350 calculating the estimated temperature T4 of the perishables on the basis of the temperature of the perishables T3 at the current time, the decision unit 365 can more appropriately decide the delivery of the perishables and can enable reduction of the scrap of the perishables.

When T4, which is new estimated temperature estimated on the basis of new transportation information acquired while transporting the perishables in transport to the destination 120, exceeds the target temperature Tt at the destination 120, the decision unit 365 may stop transporting the perishables in transport to the destination 120. Herein, when the transportation to the destination 120 corresponds to an accepted order, the decision unit 365 may assign the order to another transporter 140 and change the transportation plan such that the another transporter 140 transports the perishables to the destination 120. In addition, the decision unit 365 may decide to transport the perishables of which the transportation to the destination 120 has been stopped to the destination 120 of another order according to the change of the transportation plan, or may decide to transport the perishables to the storage 110 or the storages 130a to 130c for temporary refrigeration or freezing storage.

In this manner, when new transportation information is acquired, the estimated temperature in the destination 120 is updated to be compared with the target temperature, and thus when there is a chance that freshness of perishables cannot be sufficiently maintained in the current transportation plan due to a change in the status, the order processing device 160 can change the transportation plan and transport perishables having higher freshness to the destination 120. As a result, the order processing device 160 can meet the demand for perishables and reduce the scrap of perishables.

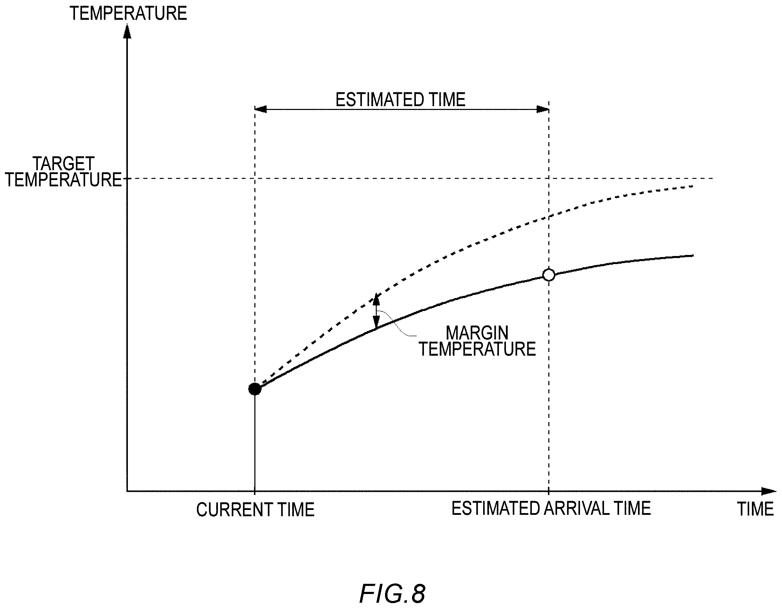

Fig. 8 is a graph illustrating an example of a pass/fail determination method of the estimated temperature estimated by the order processing device 160 according to the present embodiment. In the present drawing, a horizontal axis is set as time, a vertical axis is set as temperature, and an example of the temperature change of the perishables is illustrated which is estimated from the current temperature of the perishables included in the transportation information by the temperature estimation unit 350.

The temperature estimation unit 350 calculates the estimated temperature of perishables to be transported by the transporter 140 at the destination 120 by using the method illustrated in connection with Figs. 4 and 6. Herein, due to estimation accuracy of the temperature, a deviation in arrival time, a change in outside air temperature, and other various factors, the estimated temperature may deviate from the temperature of the perishables actually transported to the destination 120. Therefore, the temperature estimation unit 350 may provide a margin for comparison between the estimated temperature and the target temperature.

The decision unit 365 may decide whether to transport the perishables in transport to the destination 120 on condition that there is a margin that is equal to or higher than margin temperature between the target temperature and the estimated temperature at the destination 120. For example, the decision unit 365 decides to transport the perishables in transport to the destination 120 on condition that the temperature obtained by adding the margin temperature to the estimated temperature is equal to or lower than the target temperature. In the example of the present drawing, the decision unit 365 uses, as this margin temperature, a value that is smaller when the estimated time is shorter and is larger when the estimated time is longer. By using such a margin temperature, in the transportation at a short distance, the degree of freedom of the transportation plan can be increased by reducing the margin temperature, and in the transportation at a long distance, a sufficient margin for the freshness of the perishables can be provided by increasing the margin temperature.

Alternatively, when other factors such as reduction in calculation amount or simplification of processing are emphasized, the decision unit 365 may use another type of margin temperature, for example, a constant margin temperature regardless of the estimated time.

Various embodiments of the present invention may also be described with reference to flowcharts and block diagrams, where the blocks may represent (1) a stage of a process in which an operation is performed or (2) a section of a device that is responsible for performing the operation. Specific steps and sections may be implemented by a dedicated circuit, a programmable circuit supplied with a computer-readable instruction stored on a computer-readable medium, and/or a processor supplied with the computer-readable instruction stored on the computer-readable medium. The dedicated circuit may include a digital and/or analog hardware circuit, and may include an integrated circuit (IC) and/or a discrete circuit. The programmable circuit may include a reconfigurable hardware circuit which includes memory elements such as logical AND, logical OR, logic XOR, logic NAND, logic NOR, and other logical operations, flip-flops, registers, field programmable gate arrays (FPGA), programmable logic arrays (PLA), or the like.

The computer-readable medium may include any tangible device capable of storing instructions for execution by an appropriate device, so that the computer-readable medium having the instructions stored thereon includes a product including instructions that can be executed in order to create means for executing the operations designated in the flowcharts or block diagrams. Examples of the computer-readable medium may include an electronic storage medium, a magnetic storage medium, an optical storage medium, an electromagnetic storage medium, a semiconductor storage medium, and the like. More specific examples of the computer-readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-Ray (registered trademark) disk, a memory stick, an integrated circuit card, and the like.

The computer-readable instruction may include: an assembler instruction, an instruction-set-architecture (ISA) instruction; a machine instruction; a machine dependent instruction; a microcode; a firmware instruction; state-setting data; or either a source code or an object code written in any combination of one or more programming languages, including an object oriented programming language such as Smalltalk (registered trademark), JAVA (registered trademark), C++, or the like; and a conventional procedural programming language such as a "C" programming language or a similar programming language.

The computer-readable instruction may be provided for a processor or a programmable circuit of a programmable data processing device of a general-purpose computer, a special purpose computer, another computer, or the like locally or via a local area network (LAN) or a wide area network (WAN) such as the Internet, and the computer-readable instruction may be executed to create means for executing the operations designated in the flowcharts or block diagrams. Examples of the processor include a computer processor, a processing unit, a microprocessor, a digital signal processor, a controller, a microcontroller, and the like.

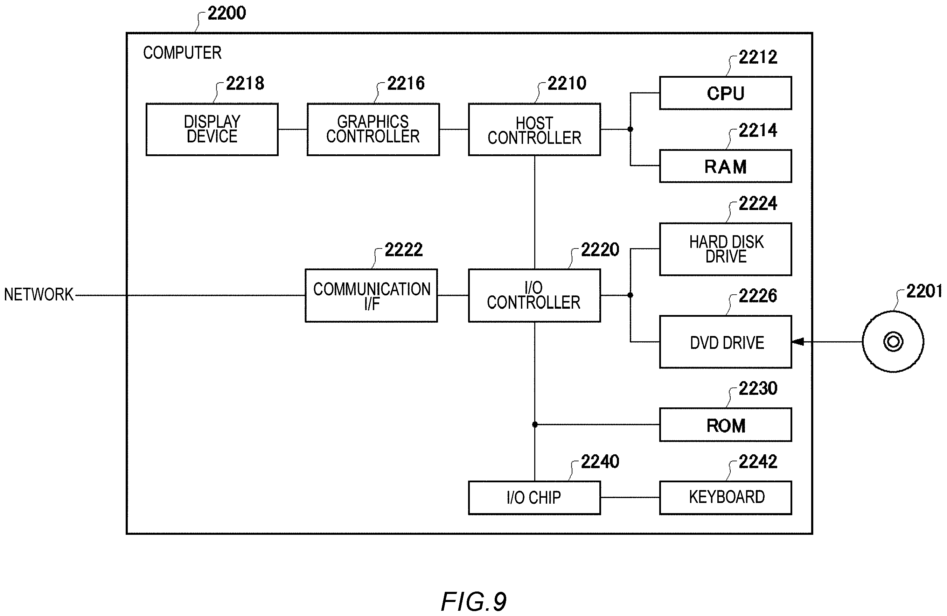

Fig. 9 illustrates an example of a computer 2200 in which a plurality of aspects of the present invention may be embodied in whole or in part. A program installed in the computer 2200 can cause the computer 2200 to function as an operation associated with the device according to the embodiment of the present invention or as one or more sections of the device, or can cause the operation or the one or more sections to be executed, and/or can cause the computer 2200 to execute a process according to the embodiment of the present invention or a stage of the process. Such a program may be executed by a CPU 2212 to cause the computer 2200 to perform certain operations associated with some or all of the blocks in the flowcharts and block diagrams described in the present specification.

The computer 2200 according to the present embodiment includes the CPU 2212, a RAM 2214, a graphic controller 2216, and a display device 2218, which are mutually connected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes as a ROM 2230 and legacy input/output units such as a keyboard 2242, which are connected to input/output controller 2220 via an input/output chip 2240.

The CPU 2212 operates according to the programs stored in the ROM 2230 and the RAM 2214, thereby controlling each unit. The graphics controller 2216 acquires the image data generated by the CPU 2212 in a frame buffer or the like provided in the RAM 2214 or in itself and causes the image data to be displayed on the display device 2218.

The communication interface 2222 communicates with other electronic devices via a network. The hard disk drive 2224 stores programs and data used by the CPU 2212 in the computer 2200. The DVD-ROM drive 2226 reads a program or data from a DVD-ROM 2201 and provides the program or data to the hard disk drive 2224 via the RAM 2214. The IC card drive reads a program and data from an IC card and/or writes a program and data to the IC card.

The ROM 2230 stores therein a boot programs or the like executed by the computer 2200 at the time of activation and/or a program depending on the hardware of the computer 2200. The input/output chip 2240 may also connect various input/output units to the input/output controller 2220 via parallel ports, serial ports, keyboard ports, mouse ports, or the like.

The program is provided by a computer-readable medium such as the DVD-ROM 2201 or the IC card. The program is read from a computer-readable medium, installed in the hard disk drive 2224, the RAM 2214, or the ROM 2230 which is also an example of the computer-readable medium, and executed by the CPU 2212. The information processing described in these programs is read by the computer 2200 and provides cooperation between the programs and various types of hardware resources. The device or method may be configured by implementing operations or processing of information according to use of the computer 2200.

For example, when communication is performed between the computer 2200 and an external device, the CPU 2212 may execute a communication program loaded in the RAM 2214 and instruct the communication interface 2222 to perform communication processing based on the processing described in the communication program. Under the control of the CPU 2212, the communication interface 2222 reads transmission data stored in a transmission buffer processing area provided in a recording medium such as the RAM 2214, the hard disk drive 2224, the DVD-ROM 2201, or the IC card, transmits the read transmission data to the network, or writes reception data received from the network in a reception buffer processing area or the like provided on the recording medium.

The CPU 2212 may cause the RAM 2214 to read all or a necessary portion of a file or a database stored in an external recording medium such as the hard disk drive 2224, the DVD-ROM drive 2226 (DVD-ROM 2201), or the IC card, and may execute various types of processing on data on the RAM 2214. Next, the CPU 2212 writes back the processed data to the external recording medium.

Various types of information such as various types of programs, data, tables, and databases may be stored in a recording medium and subjected to information processing. The CPU 2212 may execute various types of processing, which is described throughout the present disclosure and includes various types of operations designated by an instruction sequence of a program, information processing, condition determination, conditional branching, unconditional branching, information retrieval/replacement, and the like, on the data read from the RAM 2214 and writes back the results to the RAM 2214. In addition, the CPU 2212 may search for information in a file, a database, or the like in the recording medium. For example, when a plurality of entries each having the attribute value of a first attribute associated with the attribute value of a second attribute is stored in the recording medium, the CPU 2212 may search the plurality of entries for an entry matching a condition in which the attribute value of the first attribute is designated, read the attribute value of the second attribute stored in the entry, and thus acquire the attribute value of the second attribute associated with the first attribute satisfying a predetermined condition.

The programs or software modules described above may be stored in a computer-readable medium on the computer 2200 or near the computer 2200. In addition, a recording medium such as a hard disk or a RAM provided in a server system connected to a dedicated communication network or the Internet can be used as the computer-readable medium, thereby providing a program to the computer 2200 via the network.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by a device, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: Physical distribution processing system
20: Physical distribution system
100: Storage
110: Storage
120a to 120d: Destination
130a to 130c: Storage
140a and 140b: Transporter
150: Transport processing device
160: Order processing device
200: Transportation information reception unit
210: Transportation information transmission unit
220: Transport instruction reception unit
230: Transport instruction transmission unit
240: Transport processing unit
300: Order information acquisition unit
310: Order information DB
320: Transportation information acquisition unit
330: Transportation information DB
340: Time estimation unit
350: Temperature estimation unit
360: Transport instruction DB
365: Decision unit
370: Transport instruction unit
380: Order response unit
390: Update instruction unit
395: Presentation unit
2200: Computer
2201: DVD-ROM
2210: Host controller
2212: CPU
2214: RAM
2216: Graphic controller
2218: Display device
2220: Input/output controller
2222: Communication interface
2224: Hard disk drive
2226: DVD-ROM drive
2230: ROM
2240: Input/output chip
2242: Keyboard

## Claims

1. A device comprising:
an order information acquisition unit configured to acquire order information including destination information indicating a destination for transporting perishables to be ordered;
a transportation information acquisition unit configured to acquire transportation information including a temperature and location information of perishables in transport;
a temperature estimation unit configured to calculate, on a basis of the transportation information and the order information, an estimated temperature at the destination in a case where the perishables in transport are transported to the destination;
a decision unit configured to decide whether to transport the perishables in transport to the destination on a basis of the estimated temperature; and
an instruction unit configured to provide instruction to transport the perishables in transport to the destination according to a result of the decision.

2. The device according to claim 1, wherein
the order information further includes a type of the perishables to be ordered,
the transportation information further includes a type of the perishables in transport, and
the decision unit is configured to decide to transport the perishables in transport to the destination on condition that the type included in the order information matches the type included in the transportation information.

3. The device according to claim 1 or 2, wherein
the order information further includes an arrival deadline of the perishables to be ordered, the device further comprising
a time estimation unit configured to calculate, on a basis of the transportation information and the order information, an estimated time to the destination in a case where the perishables in transport are transported to the destination, wherein
when it is determined on a basis of the estimated time that the arrival deadline is able to be met, the decision unit is configured to decide to transport the perishables in transport to the destination.

4. The device according to any one of claims 1 to 3, wherein the temperature estimation unit is configured to calculate the estimated temperature further on a basis of a refrigerated state of the perishables in transport.

5. The device according to any one of claims 1 to 4, further comprising an update instruction unit configured to, when temperature of perishables transported to the destination is higher than a target temperature, provide instruction to update at least one of a pre-cooling condition before start of transportation or a refrigeration condition during transportation.

6. The device according to any one of claims 1 to 5, wherein
the order information further includes an order amount of the perishables to be ordered, and
when the order amount exceeds a remaining amount obtained by subtracting an amount of ordered perishables from a total amount of the perishables in transport and stored perishables, the decision unit is configured to decide not to accept an order corresponding to the order information.

7. The device according to claim 6, wherein when the order amount exceeds an amount of unordered perishables among the perishables in transport, the decision unit is configured to decide to cause a transporter loading the perishables in transport to stop by at a perishables storage and replenish perishables.

8. The device according to any one of claims 1 to 7, wherein when new estimated temperature estimated on a basis of new transportation information acquired while the perishables in transport are transported to the destination exceeds a target temperature at the destination, the decision unit is configured to stop transporting the perishables in transport to the destination.

9. The device according to any one of claims 1 to 8, wherein
the order information acquisition unit is configured to acquire a plurality of pieces of the order information from a plurality of customers, and
the decision unit is configured to decide, on a basis of the estimated temperature calculated for each of the plurality of pieces of order information, order information, of which a corresponding order is to be accepted, among the plurality of pieces of order information.

10. The device according to claim 9, wherein the decision unit is configured to decide, further on a basis of a profit obtained when each of the plurality of pieces of order information is ordered, order information, of which a corresponding order is to be accepted, among the plurality of pieces of order information.

11. The device according to any one of claims 1 to 8, further comprising
a presentation unit configured to present a price of the perishables in transport, wherein
the order information acquisition unit is configured to acquire the order information corresponding to an order placed according to presentation of the price.

12. The device according to any one of claims 1 to 11, wherein the decision unit is configured to decide to transport, to a storage, perishables which are not able to be ordered during transportation.

13. The device according to any one of claims 1 to 12, comprising
a time estimation unit configured to calculate, on a basis of the transportation information and the order information, an estimated time to the destination in a case where the perishables in transport are transported to the destination, wherein
the decision unit is configured to decide whether to transport the perishables in transport to the destination on condition that there is a margin that is equal to or higher than margin temperature between a target temperature at the destination and the estimated temperature, the margin temperature becoming smaller when the estimated time is shorter.

14. The device according to any one of claims 1 to 13, wherein
the transportation information acquisition unit is configured to acquire the transportation information for each of a plurality of transporters, and
the decision unit is configured to decide which transporter among the plurality of transporters is to be moved to the destination on a basis of the estimated temperature calculated on a basis of the transportation information for each of the plurality of transporters.

15. A method comprising:
acquiring, by a computer, order information including destination information indicating a destination for transporting perishables to be ordered;
acquiring, by the computer, transportation information including temperature and location information of perishables in transport;
calculating, by the computer, on a basis of the transportation information and the order information, an estimated temperature at the destination in a case where the perishables in transport are transported to the destination;
deciding, by the computer, whether to transport the perishables in transport to the destination on a basis of the estimated temperature; and
providing, by the computer, instruction to transport the perishables in transport to the destination according to a result of the deciding.

16. A program that, when executed by a computer, causes the computer to perform operations comprising:
acquiring order information including destination information indicating a destination for transporting perishables to be ordered;
acquiring transportation information including temperature and location information of perishables in transport;
calculating, on a basis of the transportation information and the order information, an estimated temperature at the destination in a case where the perishables in transport are transported to the destination;
deciding whether to transport the perishables in transport to the destination on a basis of the estimated temperature; and providing instruction to transport the perishables in transport to the destination according to a result of the deciding.
